**Europäisches Patentamt**

**European Patent Office**

**Office européen des brevets**

(11) Numéro de publication: **0 131 506**
**B1**

# (12) FASCICULE DE BREVET EUROPÉEN

(45) Date de publication du fascicule du brevet:
03.02.88

(21) Numéro de dépôt: **84401387.0**

(22) Date de dépôt: **29.06.84**

(51) Int. Cl.⁴: **G 01 N 1/10**

(54) **Dispositif de prélèvement d'échantillons de liquide.**

(30) Priorité: **05.07.83 FR 8311141**

(43) Date de publication de la demande:
**16.01.85 Bulletin 85/3**

(45) Mention de la délivrance du brevet:
**03.02.88 Bulletin 88/5**

(84) Etats contractants désignés:
**AT BE CH DE FR GB IT LI LU NL SE**

(56) Documents cité:
**FR-A-1 544 244**
**FR-A-2 067 416**
**FR-A-2 317 002**
**US-A-3 834 588**
**US-A-4 323 537**

(73) Titulaire: **RHONE- POULENC CHIMIE, 25, quai Paul Doumer, F-92408 Courbevoie Cédex (FR)**

(72) Inventeur: **Benet, Robert, 78, rue de la République, F-76120 Grand Quevilly (FR)**
Inventeur: **Jouannic, Maurice, 1, rue de Chantereine, F-76000 Rouen (FR)**

(74) Mandataire: **Dubruc, Philippe, RHONE- POULENC INTERSERVICES Service Brevets Chimie 25, quai Paul- Doumer, F-92408 Courbevoie Cédex (FR)**

## Description

L'invention concerne un dispositif de prélèvement d'échantillons de liquide à partir d'un mélange de liquide et de solide.

Dans l'industrie chimique en particulier on a souvent affaire à des procédés nettant en oeuvre des milieux reactionnels constitués par un mélange de liquide et de solide. Dans de tels cas on a souvent intérêt à pouvoir analyser la phase liquide de ce mélange de manière à pouvoir suivre le déroulement de la réaction ou à pouvoir la contrôler.

Un exemple typique est la fabrication de l'acide phosphorique par voie humide, où le minerai de phosphate est attaqué par un acide fort. Dans le cas d'une attaque à l'acide sulfurique, on obtient une bouillie constituée par une phase liquide qui comprend notamment l'acide phosphorique formé et une phase solide qui contient en particulier du sulfate de calcium.

Or, afin de garantir le bon déroulement de la réaction, il est très important de pouvoir maintenir une teneur en ions sulfate du milieu réactionnel dans un domaine bien précis. Pour cela il est donc nécessaire de pouvoir déterminer rapidement et aussi souvent que nécessaire cette concentration en ions sulfate.

On connait par le brevet français n° 2 090 541 un appareil d'analyse automatique en continu de $H_2SO_4$ dans l'acide phosphorique qui travaille sur l'acide fort issu de la filtration de la bouillie d'attaque.

L'inconvénient d'un tel appareil réside justement dans le fait qu'il analyse un acide issu de la filtration. En effet il se peut très bien que cet analyse ne reflète pas précisément les conditions qui régnent dans la cuve d'attaque. Ainsi lors de la filtration, des phénomènes divers peuvent avoir lieu qui modifient la composition de l'acide. Par ailleurs, il est préférable de pouvoir analyser l'acide directement dans la cuve plutôt qu'à la sortie du filtre de manière à avoir un temps de réponse beaucoup plus court et donc une possibilité d'intervention immédiate.

Cependant, il s'avère difficile de mettre au point un dispositif permettant de prélever en vue d'une analyse, un échantillon d'acide directement à partir du milieu réactionnel. En effet pour être utilisable industriellement un tel dispositif doit pouvoir résister à la corrosion, il doit fonctionner sans nécessiter de nettoyages fréquents et donc il doit être conçu de manière à ne pas être encrassé rapidement par la bouillie d'attaque. En outre, l'échantillon de liquide doit être débarrassé le plus possible de toute impureté solide pour que l'analyse puisse être faite sans problème.

On connait certes par le brevet français n° 1 544 244 un dispositif de prélèvement d'échantillons plongeant dans le milieu réactionnel même et comprenant un récipient de retenu recevant du liquide filtré qui a été préalablement stocké dans un récipient d'échantillonnage, mais l'inconvénient principal d'un tel dispositif réside justement dans le fait que tous les échantillons destinés à l'analyse ont nécessairement séjourné dans ledit récipient d'échantillonnage, de sorte que les échantillons peuvent être contaminés par des impuretés rémanentes contenues dans ce récipient, ce qui peut fausser de manière rédhibitoire les analyses ultérieures de l'échantillon.

L'objet de l'invention est donc un dispositif simple et fiable pouvant prélever pour une analyse ultérieure un échantillon de liquide à partir d'une bouillie ou d'un mélange de liquide et de solide. Dans ce but, la Demanderesse a mis au point un dispositif de prélèvement d'échantillon de liquide à partir d'un mélange de liquide et de solide, du type comprenant:

- des moyens de filtration dudit mélange et de réception du liquide filtré (4)
- une chambre d'emmagasinage de liquide (5) raccordée par une première conduite (9) auxdits moyens de filtration et de réception,
- une chambre (6) pour la réception d'un échantillon de liquide, raccordée par une seconde conduite (10) auxdits moyens de filtration et de réception et munie de moyens d'évacuation (24) vers l'extérieur de l'échantillon emmagasiné, un organe d'obturation (47) étant disposé sur ladite seconde conduite, dispositif caractérisé en ce que lesdites deux chambres sont raccordées en parallèle auxdits moyens de filtration et de réception permettant ainsi le remplissage ou la vidange de la chambre pour la réception de l'échantillon indépendamment de la chambre d'emmagasinage.

Selon des variantes préférées de l'invention, les chambres précitées sont raccordées indépendamment ou non à une source de vide par l'intermédiaire d'un circuit comprenant au moins un organe d'obturation. De même, elles peuvent être raccordées indépendamment ou non à une alimentation en eau et/ou à une alimentation en air par l'intermédiaire de circuits comprenant respectivement au moins un organe d'obturation. Un dispositif selon une variante de l'invention peut comporter un programmateur actionnant les organes d'obturation.

En outre, le dispositif de l'invention peut comporter des moyens de dilution du liquide échantillon évacué de la seconde chambre qui comprennent:

- une première capacité tarée recevant le liquide évacué de la seconde chambre,
- un ou plusieurs récipients de mélange montés en série, dans lequel ou dans le premier desquels débite la première capacité précitée, et débouchant dans un récipient de réception;
- une seconde ou, dans le cas de plusieurs récipients de mélange, une série de secondes capacités tarées montées en parallèle et reliées par l'intermédiaire d'un circuit à une alimentation en eau et débitant chacune dans un récipient respectif de mélange;
- des organes d'obturation dans le circuit d'alimentation en eau de la seconde capacité ou de la série de secondes capacités et dans chacune des conduites de liaison entre la ou les capacités et le ou les récipients de mélange et entre ceux-ci.

Compte tenu de sa simplicité, le dispositif de l'invention peut fonctionner sans nécessiter de nettoyages fréquents. Par ailleurs grâce à sa structure, il permet de fournir à l'analyseur un échantillon de liquide particulièrement propre c'est-à-dire sans impuretés solides.

L'invention ainsi que d'autres caractéristiques et avantages de celle-ci seront mieux compris à la lecture de la description qui va suivre faite en référence aux dessins annexés dans lesquels:

- la figure 1 est un schéma du dispositif selon l'invention avec un système de dilution selon un premier mode de réalisation.

- la figure 2 est un schéma du dispositif de l'invention avec un système de dilution selon un deuxième mode de réalisation.

La description qui suit est faite pour le cas d'un appareil utilisé dans un procédé de préparation d'acide phosphorique. Il est bien évident qu'elle peut s'appliquer à tout autre procédé chimique donnant lieu à un mélange reactionnel plus ou moins chargé en solide.

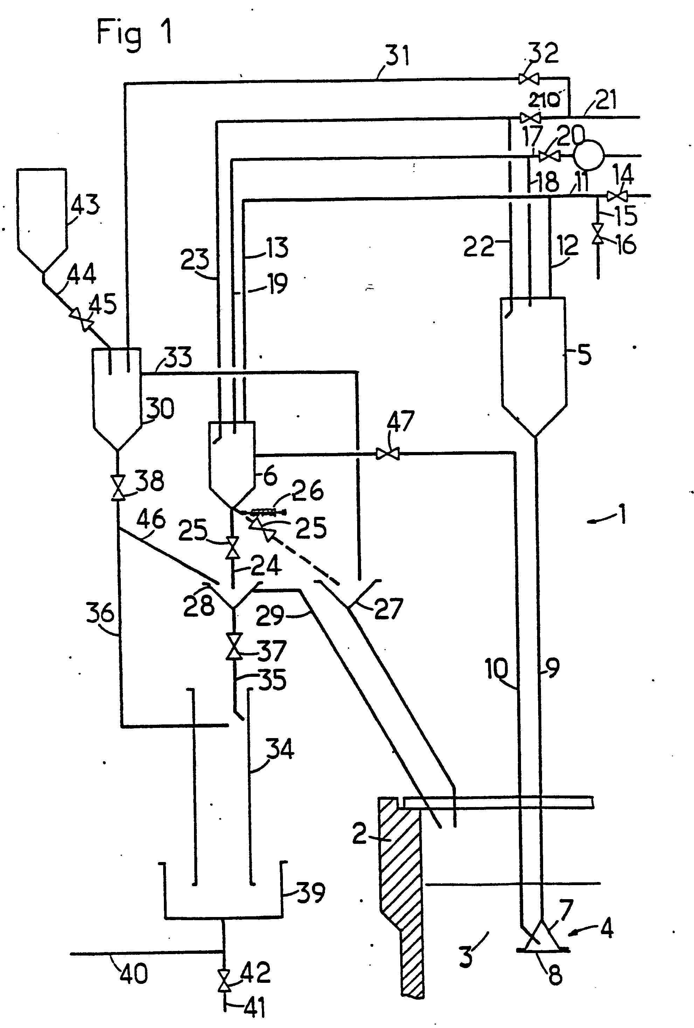

En se référant à la figure 1, on peut voir le dispositif 1 de l'invention, monté sur une cuve d'attaque 2 contenant une bouillie 3 comprenant un mélange de phosphate, d'acide phosphorique, d'acide sulfurique et de sulfate de calcium notamment.

Le dispositif de prélévement d'échantillon 1 est essentiellement constitué par des moyens 4 de filtration du mélange et de réception du liquide filtré et de deux chambres 5, 6 d'emmagasinage du liquide filtré.

Les moyens 4 peuvent avoir toute structure convenable. Pour le mode de réalisation illustré qui convient particulièrement bien au cas de l'acide phosphorique, les moyens 4 que l'on désignera par le terme de "filtre" dans la suite comprennent un récipient conique 7 dont la base est munie d'un organe de filtration 8. Cet organe de filtration peut être par exemple une toile filtrante du type utilisé habituellement pour les filtres de bouillie d'attaque. La toile ou plus généralement l'organe de filtration peut être fixé par tout moyen convenable au récipient 7 et occuper une partie seulement ou la totalité de sa base. L'ensemble du récipient et de l'organe de filtration est de préférence immergé dans la bouillie 3 à une profondeur plus ou moins grande.

La première chambre d'emmagasinage 5 est raccordée par une conduite 9 au filtre 4, et la seconde chambre 6 par une conduite 10 munie d'un organe d'obturation 47 qui peut être une électrovanne. Dans la suite de la description on parlera d'électrovanne mais il est évident que tout autre organe d'obturation analogue peut être utilisé. Selon une caractéristique importante de l'invention, ces deux chambres sont donc montées en parallèle par rapport au filtre 4, le filtrat ne peut donc pas passer directement et successivement du filtre à la chambre 5 puis à la chambre 6. Dans le cas illustré, les conduites 9 et 10 sont totalement distinctes. Elles pourraient éventuellement avoir une partie commune. Pour le type de filtre dessiné, il est avantageux de faire déboucher la conduite 9 de la première chambre au sommet du récipient conique 7 ou au voisinage de celui-ci et la conduite 10 de l'autre chambre au voisinage immédiat de l'organe de filtration.

De préférence, les chambres 5 et 6 sont cylindriques et sont munies d'un fond conique. Des conduites 11, 12, 13 relient les chambres 5 et 6 à une source de vide non représentée. La conduite 11 est munie d'une électrovanne 14.

Un piquetage 15 sur la conduite 11 muni d'une vanne 16 permet de casser le vide.

Par ailleurs, des conduites 17, 18 et 19 relient les chambres 5 et 6 à une source d'air comprimé non représentée, l'entrée d'air dans la conduite 17 étant commandée par une vanne 20.

En outre, des conduites 21, 22 et 23 relient les chambres 5 et 6 à une arrivée d'eau non représentée. Une électrovanne 210 est prévue sur la conduite 21. On notera que les conduites d'eau 22 et 23 sont disposées de manière à déboucher dans les chambres tangentiellement à leurs parois. Dans le cas préféré où les chambres sont cylindriques, cette disposition des conduites permet de faire s'écouler l'eau dans les chambres suivant un mouvement cyclonique.

Une conduitte 24 muni d'une vanne 25 permet d'évacuer le contenu de la chambre 6. La conduite 24 peut être montée de manière souple de sorte qu'elle puisse prendre deux positions par l'action d'un mécanisme de commande 26 du type électro-aimant. Dans la première position, la conduite 24 débite vers l'extérieur du système en direction d'un analyseur par l'intermédiaire éventuellement d'un dispositif de dilution qui sera décrit plus en détail ci-dessous.

Dans la deuxième position, la conduite 24 débite dans une capacité 27 qui rejette le liquide à l'égout ou qui le ramène au mélange à analyser, dans la cuve d'attaque par exemple.

Suivant le type d'analyseur utilisé, il peut être nécessaire de diluer plus ou moins l'échantillon recueilli par le dispositif de prélèvement. En outre, dans le cas particulier de l'acide phosphorique, cette dilution peut éviter la formation de dépôts solides, notamment de fluosilicates et elle doit être réalisée dès que possible. C'est pourquoi le dispositif de l'invention peut comporter des moyens de dilution de l'échantillon qui vont maintenant être décrits.

Ces moyens comprennent tout d'abord une capacité 28 tarée très exactement et munie d'un trop plein 29 pour l'évacuation des excès, ce trop plein pouvant débiter par exemple dans la cuve d'attaque. C'est dans cette capacité 28 que débite la conduite d'évacuation 24 de la chambre 6 dans sa première position.

Les moyens de dilution comprennent par ailleurs une seconde capacité 30 tarée très exactement et reliée pour une conduite 31 munie d'une électrovanne 32 à la source d'eau. La capacité 30 est munie d'un trop plein 33 débitant par exemple dans la capacité 27. De préférence, la capacité 30 est cylindrique et est munie d'un fond conique.

Les capacités 28 et 30 sont reliées à un tube mélangeur 34 par l'intermédiaire des conduites 35 et 36 respectivement, munies chacune d'une électrovanne 37 et 38 respectivement. De préférence, les conduites 35 et 36 sont disposées de manière à déboucher tangentiellement par rapport à la paroi du tube mélangeur. Une dérivation 46 est prévue sur la conduite 36 qui débouche sur la capacité 28.

Le tube mélangeur 34 débouche dans un récipient de réception 39 relié par une conduite 40 à un analyseur non représenté et par une conduite 41 munie d'une électrovanne 42 à l'égout.

L'analyseur, qui ne fait pas partie de l'invention, peut être de tout type connu et est adapté bien sûr à l'échantillon recueilli.

On peut prévoir enfin un réservoir 43 pour un liquide de nettoyage, par exemple de l'acide nitrique dans le cas de l'emploi du dispositif dans la fabrication de l'acide phosphorique. Ce réservoir débite par l'intermédiaire de la conduite 44 munie d'une électrovanne 45 dans la capacité 30.

Les différentes électrovannes sont actionnées par un programmateur non représenté.

Le dispositif de la figure 1 fonctionne de la manière suivante.

Le filtre 4 est immergé dans la cuve et la chambre 5 est mise ssous vide par ouverture de la vanne 14. Les autres vannes sont fermées notamment la vanne 47.

Par suite de l'aspiration, un gâteau, de gypse par exemple, se forme sous la toile filtrante 8. De l'acide passe dans le récipient 7 et remplit la chambre 5. Cet acide est sale tout au moins au début de l'opération. Au bout d'un certain temps, le gâteau joue le rôle de filtre et l'acide aspiré devient propre. A ce moment, la vanne 47 s'ouvre et un volume d'acide déterminé est aspiré dans la chambre 6. Cet acide propre constitue l'échantillon destiné à l'analyse.

Les vannes 14 et 47 sont ensuite fermées, les vannes 16 et 25 sont ouvertes, le vide est coupé. L'acide contenu dans la chambre 5 s'écoule vers le filtre 4 et traverse la toile 8 en décollant le gâteau. L'échantillon s'écoule par 24 dans la capacité 28 et va être dilué suivant un processus décrit plus loin.

Ensuite, les vannes 210 et 47 sont ouvertes et de l'eau chaude sous pression lave les chambres 5 et 6 et les conduites 9 et 10. Pendant ce temps la conduite 24 est amenée par 26 en position pour débiter dans la capacité 27 de manière à permettre l'écoulement du liquide de rinçage collecté au fond de la chambre 6.

Enfin, après fermeture de la vanne 210, la vanne 20 est ouverte et on envoie de l'air comprimé dans les chambres 5 et 6 et les conduites 9 et 10. Cet air chasse les dernières traces d'eau et en obligeant le reste d'eau à passer à travers la toile de filtration décolmate celle-ci.

Le cycle de prélèvement d'échantillon proprement dit est terminé. Les vannes 20 et 47 se ferment et la vanne 14 s'ouvre permettant ainsi le prélèvement d'un autre échantillon.

Postérieurement ou simultanément à ce cycle de prélèvement se découle un cycle de dilution de l'échantillon qui va maintenant être expliqué. Dans le cas décrit, le système permet une dilution au dixième. Il est bien évident qu'une toute autre valeur de dilution pourrait être choisie en modifiant les volumes de liquide mis en oeuvre.

L'échantillon contenu dans la chambre 6 s'écoule dans la capacité 28 tarée très précisément à 50 cm$^3$. Le trop plein est évacué par 29.

Par ailleurs, par ouverture de la vanne 32 pendant un temps fixé, la capacité 30 tarée très exactement à 450 cm$^3$ se remplit. L'eau amenée dans la capacité 30 reçoit en outre un léger appoint d'acide nitrique du réservoir 43 après ouverture de la vanne 45. Le trop plein éventuel dans la capacité 30 s'écoule par 33.

On ouvre ensuite simultanément les vannes 37 et 38 et les liquides contenus dans les capacités 28 et 30 se mélangent au cours de leur mouvement cyclonique dans le mélangeur 34. Le mélange résultant est recueilli dans le récipient 39. Un peu d'eau s'écoule par ailleurs par la dérivation 46 qui permet de laver la capacité 28. Compte-tenu des volumes mis en oeuvre, le mélange obtenu représente une dilution au di`ème de l'échantillon prélevé, la quantité n`.`essaire d'échantillon dilué est ensuite amenée à l'analyseur par 40. Le reste éventuel est évacué par 41 après ouverture de 42.

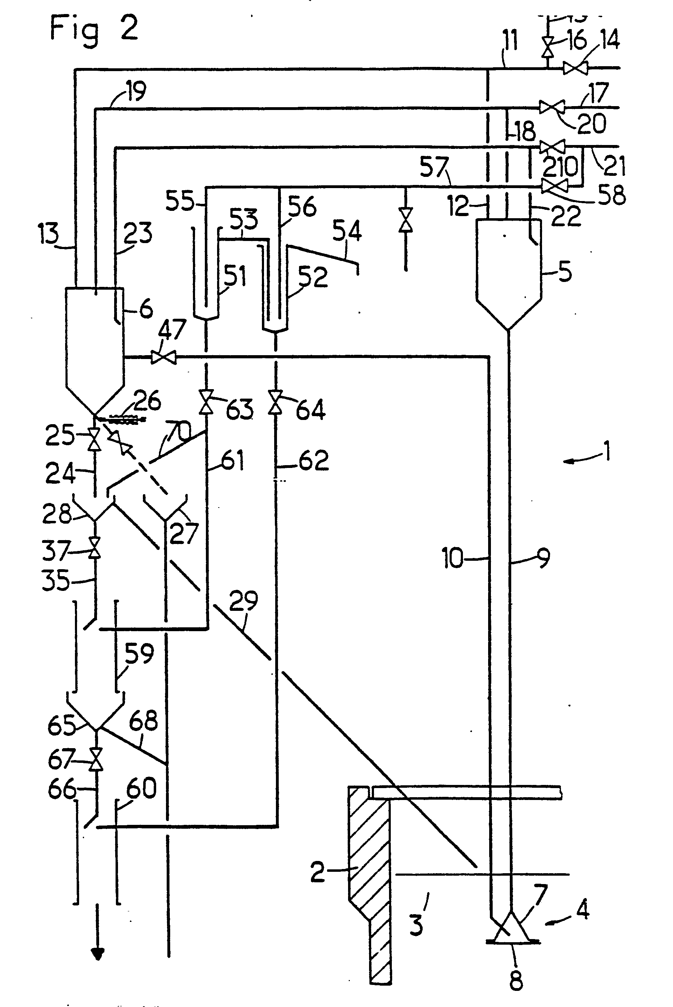

Le dispositif de la figure 2 ne diffère de celui de la figure 1 que par la partie dilution qui est un peu plus complexe. Elle permet une dilution au centième. En conséquence, les mêmes éléments de la partie prélèvement sont repérés par les mêmes références que dans la figure 1 et ils ne sont pas décrits de nouveau.

Le dispositif de dilution comporte deux capacités 51 et 52 tarées très précisément à 450 cm$^3$. Un trop plein 53 fait communiquer la capacité 51 avec la capacité 52 cette dernière étant équipée d'un trop plein 54 pouvant débiter par exemple dans la capacité 27. Les capacités 51 et 52 sont raccordées à l'alimentation en eau par l'intermédiaire des conduites 55, 56 et 57 cette dernière étant munie d'une vanne 58.

Par ailleurs, deux tubes mélangeurs 59 et 60 sont montés en série, la capacité tarée 28 débitant dans le tube 59. Les capacités 51 et 52 débitent chacune dans un tube mélangeur 59 et 60 respectivement par l'intermédiaire des conduites 61 et 62 équipées chacune d'une électrovanne 63 et 64 respectivement. Une dérivation 70 peut relier les capacités 51 et 28.

Entre les tubes 59 et 60 est placée une capacité 65 tarée exactement à 50 cm$^3$. Le tube 59 y débite directement et la capacité 65 débite dans le tube 60 par la conduite 66 munie de l'électrovanne 67.

La capacité 65 est en outre munie d'un trop plein 68 débitant à l'égout ou éventuellement à la cuve d'attaque.

A la sortie du tube 60, on peut prévoir les mêmes éléments que ceux décrits pour le dispositif de la figure 1.

Naturellement, il serait possible de prévoir un réservoir de liquide nettoyant comme dans le cas de la figure 1.

Le dispositif de dilution qui vient d'être décrit fonctionne de la manière suivante.

Par ouverture de la vanne 55 les capacités 51 et 52 sont remplies. Puis par ouverture de la vanne 63 on réalise un premier mélange des liquides des capacités 28 et 51. Grâce à la capacité 65 on ne recueille que 50 cm$^3$ des 500 obtenus. Par ouverture ensuite des vannes 64 et 67 on mélange les liquides des capacités 65 et 52 dans le tube 60 ce qui permet d'obtenir à la sortie du tube un échantillon dilué au centième.

Naturellement de nombreuses variantes de l'invention sont possibles. C'est ainsi que sans sortir du cadre de l'invention, on pourra utiliser tout système convenable autre que celui qui a été spécifiquement décrit pour filtrer la bouillie ou le mélange.

Par ailleurs, il va de soi que le dispositif de dilution de la figure 2 pourrait être modifié en mettant en place des séries de capacité d'eau de dilution comportant plus de deux capacités et débitant respectivement dans une série de plusieurs tubes mélangeurs ceux-ci pouvant être séparés ou non entre eux par des capacités intermédiaires. Ceci est fonction de la dilution recherchée.

On peut aussi concevoir un système de dilution avec une pompe péristaltique ou doseuse dont une entrée serait branchée à la sortie de la chambre 6, la ou les autres entrées seraient branchées sur un réservoir de liquide de dilution et recevraient le débit voulu de ce liquide.

On peut enfin prévoir une dilution pour seringues ou pipettes automatiques, l'une des seringues ou pipettes pipettant l'échantillon recueilli et l'autre le liquide de dilution.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Un dispositif de prélèvement d'échantillon de liquide à partir d'un mélange de liquide et de solide, du type comprenant:
   - des moyens de filtration dudit mélange et de réception du liquide filtré (4)
   - une chambre d'emmagasinage de liquide (5) raccordée par une première conduite (9) auxdits moyens de filtration et de réception,
   - une chambre (6) pour la réception d'un échantillon de liquide, raccordée par une seconde conduite (10) auxdits moyens de filtration et de réception et munie de moyens d'évacuation (24) vers l'extérieur de l'échantillon emmagasiné, un organe d'obturation (47) étant disposé sur ladite seconde conduite,
   dispositif caractérisé en ce que lesdites deux chambres (5, 6) sont raccordées en parallèle auxdits moyens de filtration et de réception permettant ainsi le remplissage ou la vidange de la chambre pour la réception (6) de l'échantillon indépendamment de la chambre (5) d'emmagasinage.

2. Dispositif selon la revendication 1, caractérisé en ce que les chambres (5, 6) précitées sont raccordées indépendamment ou non à une source de vide par l'intermédiaire d'un circuit comprenant au moins un organe d'obturation (14).

3. Dispositif selon la revendication 1 ou 2, caractérisé en ce que les chambres (5, 6) précitées sont raccordées indépendamment ou non à une alimentation en eau (21) par l'intermédiaire d'un circuit comprenant au moins un organe d'obturation (210).

4. Dispositif selon l'une quelconque des revendications précédentes, caractérisé en ce que les chambres (5, 6) précitées sont raccordées indépendamment ou non à une alimentation en air (17) par l'intermédiaire d'un circuit comprenant au moins un organe d'obturation (20).

5. Dispositif selon l'une quelconque des revendications précédentes, caractérisé en ce que les moyens de filtration et de réception (4) précités comprennent un récipient conique (7) dont la base est munie d'un organe de filtration (8) du type toile filtrante notamment.

6. Dispositif selon la revendication 5 caractérisé en ce que la première conduite (9) précitée débouche dans le récipient conique (7) au sommet de celui-ci ou à son voisinage et en ce que la seconde conduite (10) précitée y débouche au voisinage immédiat de l'organe de filtration (8).

7. Dispositif selon l'une quelconque des revendications précédentes, caractérisé en ce qu'il comporte des moyens de dilution de l'échantillon évacué de la seconde chambre qui comprennent:
   - une première capacité tarée (28) recevant le liquide évacué de la seconde chambre,
   - un ou plusieurs récipients de mélange (34; 59, 60) montés en série dans lequel ou dans le premier desquels débite la première capacité précitée et débouchant dans un récipient de réception (31);
   - une seconde (30) ou, dans le cas de plusieurs récipients de mélange, une série de secondes capacités tarées (51, 52) montées en parallèle et reliées par l'intermédiaire d'un circuit à une alimentation en eau (21) et débitant chacune dans un récipient respectif de mélange;

- des organes d'obturation (210, 58; 38; 63, 64) dans le circuit d'alimentation en eau de la seconde capacité ou de la série de secondes capacités (51, 52) et dans chacune des conduites de liaison (36; 61, 62) entre la ou les capacités et la ou les récipients de mélange et entre ceux-ci.

8. Dispositif selon la revendication 7 comprenant plusieurs récipients de mélange (59, 60) caractérisé en ce que les récipients de mélange sont séparés entre eux par des capacités tarées (65).

9. Dispositif selon la revendication 7 ou 8, caractérisé en ce qu'il comporte un réservoir (43) de liquide de nettoyage, notamment d'acide nitrique relié à la seconde capacité (30) ou à au moins une de la série de secondes capacité précitées.

10. Dispositif selon l'une quelconque des revendications précédentes, caractérisé en ce que les circuits d'alimentation en eau des chambres (21, 22, 23) et les conduites de liaison (35; 66) entre la première capacité et le ou le premier récipient de mélange et entre la ou les secondes capacités et le ou les récipients de mélange, débouchent dans les chambres ou le ou les récipients tangentiellement à leur paroi.

11. Dispositif selon l'une quelconque des revendications 1 à 6, caractérisé en ce qu'il comporte des moyens de dilution (28, 30; 28, 51, 52) comprenant une pompe doseuse ou péristaltique dont une entrée est branchée à la sortie de la chambre de réception (6) de l'échantillon et dont la ou les autres entrées sont branchées sur un réservoir de liquide de dilution.

12. Dispositif selon l'une quelconque des revendications 1 à 6, caractérisé en ce qu'il comporte des moyens de dilution comprenant des seringues ou pipettes automatiques dont l'une pipette l'échantillon recueilli et l'autre le liquide de dilution.

13. Dispositif selon l'une quelconque des revendications précédentes, caractérisé en ce qu'il comporte un programmateur actionnant les organes d'obturation précités.

**Patentansprüche**

1. Vorrichtung zur Entnahme von Flüssigkeitsproben aus einem Gemisch einer Flüssigkeit und eines Feststoffs, umfassend:
- Mittel zur Filtration dieses Gemischs und zur Aufnahme des Filtrats (4),
- eine Kammer zum Speichern der Flüssigkeit (5), die über eine erste Leitung (9) mit diesen Mitteln zur Filtration und Aufnahme verbunden ist,
- eine Kammer (6) für die Aufnahme einer Flüssigkeitsprobe, die über eine zweite Leitung (10) mit diesen Mitteln für die Filtration und Aufnahme verbunden und mit Mitteln (24) zum Ableiten der aufbewahrten Probe nach außen ausgestattet ist, wobei ein Verschlußorgan (47) in jener zweiten Leitung angeordnet ist,

- dadurch gekennzeichnet, daß die beiden Kammern parallel mit den Mitteln zur Filtration und Aufnahme verbunden sind, um so das Auffüllen und Entleeren der Kammer für die Aufnahme der Probe unabhängig von der Speicherkammer zu ermöglichen.

2. Vorrichtung nach Anspruch 1, dadurch gekennzeichnet, daß die vorgenannten Kammern (5, 6) unabhängig voneinander an eine Vorrichtung zur Erzeugung von Unterdruck über eine Leitung angeschlossen sind, die wenigstens ein Verschlußorgan (14) aufweist.

3. Vorrichtung gemäß Anspruch 1 oder 2, dadurch gekennzeichnet, daß die vorgenannten Kammern (5, 6) unabhängig voneinander über eine Leitung, die wenigstens ein Verschlußorgan (210) aufweist, an eine Wasserversorgung (21) angeschlossen sind.

4. Vorrichtung nach einem der vorhergehenden Ansprüche, dadurch gekennzeichnet, daß die vorgenannten Kammern (5, 6) unabhängig voneinander über eine Leitung, die wenigstens ein Verschlußorgan (20) aufweist, an eine Luftversorgung (17) angeschlossen sind.

5. Vorrichtung nach einem der vorhergehenden Ansprüche, dadurch gekennzeichnet, daß die vorgenannten Mittel zur Filtration und Aufnahme (4) ein konisches Behältnis (7) aufweisen, dessen Boden mit einem Filtrationsorgan (8), insbesondere einem Filtertuch versehen ist.

6. Vorrichtung nach Anspruch 5, dadurch gekennzeichnet, daß die vorgenannte erste Leitung (9) in das konische Gefäß (7) an dessen Scheitel oder in dessen Nähe einmündet und daß die vorgenannte zweite Leitung (10) dort in unmittelbarer Nähe des Filtrationsorgans (8) einmündet.

7. Vorrichtung nach einem der vorhergehenden Ansprüche, dadurch gekennzeichnet, daß sie Mittel zur Verdünnung der aus der zweiten Kammer entnommenen Probe aufweist, die umfassen:
- ein erstes austariertes Füllvolumen (28), das die aus der zweiten Kammer abgezogene Flüssigkeit aufnimmt,
- ein oder mehrere in Serie angeordnete Mischbehälter (34, 59, 60), in die oder in den ersten davon das vorgenannte erste Füllvolumen fließt und die/der in ein Auffanggefäß (39) münden (t);
- ein zweites austariertes Füllvolumen (30) oder, im Fall mehrerer Mischgefäße eine Serie austarierter zweiter Füllvolumina (51, 52), die parallel angeordnet sind und über eine Leitung an eine Wasserversorgung (21) angeschlossen sind und jeweils in einen entsprechenden Mischbehälter münden;
- Verschlußorgane (210, 58; 38; 63; 64) in der Wasserversorgungsleitung des zweiten Füllvolumens (30) oder der Serie von zweiten Füllvolumina (51, 52) und in jeder der Verbindungsleitungen (36; 61, 62) zwischen dem oder den Volumina und den Mischbehältern und jeweils zwischen diesen.

8. Vorrichtung nach Anspruch 7 umfassend mehrere Mischbehälter (59, 60), dadurch gekennzeichnet, daß die Mischbehälter durch austarierte Füllvolumina (65) voneinander getrennt sind.

9. Vorrichtung nach Anspruch 7 oder 8, dadurch gekennzeichnet, daß sie einen Behälter (43) mit Reinigungsflüssigkeit, insbesondere Salpetersäure aufweist, der mit dem zweiten Füllvolumen (30) oder mit wenigstens einem aus der Serie der vorgenannten zweiten Füllvolumina verbunden ist.

10. Vorrichtung nach einem der vorhergehenden Ansprüche, dadurch gekennzeichnet, daß die Wasserversorgungsleitungen der Kammern (21, 22, 23) und die Verbindungsleitungen (35; 66) zwischen dem ersten Füllvolumen und dem oder dem ersten Mischbehälter und zwischen dem oder den zweiten Füllvolumina und dem oder den Mischbehältern in die Kammern oder den oder die Behälter tangential zu deren Wand einmünden.

11. Vorrichtung nach einem der Ansprüche 1 bis 6, dadurch gekennzeichnet, daß sie Mittel zur Verdünnung (28, 30; 28, 51, 52) aufweist mit einer Dosierungspumpe oder peristaltischen Pumpe, deren einer Zufluß an den Abfluß der Auffangkammer (6) für die Probe angeschlossen ist und deren anderer Zufluß oder deren andere Zuflüsse an einen Behälter mit Verdünnungsflüssigkeit angeschlossen ist (sind).

12. Vorrichtung nach einem der Ansprüche 1 bis 6, dadurch gekennzeichnet, daß sie Mittel zur Verdünnung mit automatischen Spritzen oder Pipetten aufweist, davon eine für die entnommene Probe und die andere für die Verdünnungsflüssigkeit.

13. Vorrichtung nach einem der vorhergehenden Ansprüche, dadurch gekennzeichnet, daß sie einen Programmregler aufweist, der die vorgenannten Verschlußorgane betätigt.

**Claims**

1. Apparatus for taking a liquid sample from a mixture of liquid and solid, of the type comprising:
- means (4) for filtering said mixture and receiving the filtered liquid,
- a chamber (5) for storing liquid, connected by way of a first conduit (9) to said filtering and receiving means, and
- a chamber (6) for receiving a sample of liquid, connected by way of a second conduit (10) to said filtering and receiving means and provided with means (24) for discharge of the stored sample to the exterior, a closure member (47) being disposed on said second conduit, characterised in that said two chambers are connected in parallel to said filtering and receiving means, thus permitting filling or emptying of the chamber for receiving the sample independently of the storage chamber.

2. Apparatus according to claim 1 characterised in that said chambers (5, 6) are connected, independently or otherwise, to a vacuum source by way of a circuit comprising at least one closure member (14).

3. Apparatus according to claim 1 or claim 2 characterised in that said chambers (5, 6) are connected, independently or otherwise, to a water supply (21) by way of a circuit comprising at least one closure member (210).

4. Apparatus according to any one of the preceding claims characterised in that said chambers (5, 6) are connected, independently or otherwise, to an air supply (17) by way of a circuit comprising at least one closure member (20).

5. Apparatus according to any one of the preceding claims characterised in that said filtering and receiving means (4) comprise a conical vessel (7) whose base is provided with a filtration member (8) in particular of the filter cloth type.

6. Apparatus according to claim 5 characterised in that said first conduit (9) communicates with the conical vessel (7) at the top thereof or in its vicinity and that said second conduit (10) communicates therewith in the immediate vicinity of the filtration member (8).

7. Apparatus according to any one of the preceding claims characterised in that it comprises means for diluting the sample discharged from the second chamber, comprising:
- a first calibrated container (28) for receiving the liquid discharged from the second cham'.er,
- one or more mixing vessels (34; 59, 60) which are mounted in series, into which or into the first of which said first container discharges and which open into a receiving vessel (39);
- a second calibrated container (30) or, in the case of a plurality of mixing vessels, a series of second calibrated containers (51, 52) which are mounted in parallel and which are connected by way of a circuit to a water supply (21) and which each discharge into a respective mixing vessel; and
- closure members (210, 58; 38; 63, 64) in the water supply circuit of the second container (30) or the series of second containers (51, 52) and in each of the connecting conduits (36; 61, 62) between the container or containers and the mixing vessel or vessels and between same.

8. Apparatus according to claim 7 comprising a plurality of mixing vessels (59, 60) characterised in that the mixing vessels are seperated from each other by calibrated containers (65).

9. Apparatus according to claim 7 or claim 8 characterised in that it comprises a cleaning liquid tank (43), in particular for nitric acid, which is connected to the second container (30) or to at least one of the series of said second containers.

10. Apparatus according to any one of the preceding claims characterised in that the water supply circuits for the chambers (21, 22, 23) and the connecting conduits (35; 66) between the first container and the mixing vessel or the first mixing vessel and between the second container or containers and the mixing vessel or vessels open into the chambers or the vessel(s) tangentially to the wall thereof.

11. Apparatus according to any one of claims 1 to 6 characterised in that it comprises dilution means (28, 30; 28, 51, 52) comprising a metering or peristaltic pump having an intake connected to the outlet of the sample receiving chamber (6) and the other inlet or inlets connected to a dilution liquid tank.

12. Apparatus according to any one of claims 1 to 6 characterised in that it includes dilution means comprising automatic pipettes or syringes, of which one pipettes the collected sample and the other the dilution liquid.

13. Apparatus according to any one of the preceding claims characterised in that it comprises a programmer for actuating said closure members.

# Fig 1

# Fig 2